# EUROPÄISCHE PATENTSCHRIFT

(11) **EP 3 563 737 B1**
(45) Veröffentlichungstag und Bekanntmachung des Hinweises auf die Patenterteilung: **04.05.2022**
(21) Anmeldenummer: 19168575.9
(22) Anmeldetag: 11.04.2019
(51) Int. Cl.: A47K 3/30

(54) **PLATTENHALTER FÜR TRAGKONSTRUKTIONEN**
PLATE HOLDER FOR SUPPORTING STRUCTURES
SUPPORT DE PLAQUES POUR STRUCTURES PORTEUSES

(30) Priorität: 30.04.2018 DE 102018110368
(43) Veröffentlichungstag der Anmeldung: 06.11.2019
(73) Patentinhaber: Schiffler, Dietmar, 97337 Dettelbach (DE)
(72) Erfinder: Schiffler, Dietmar, 97337 Dettelbach (DE)
(74) Vertreter: advotec.

(56) Entgegenhaltungen:
- DE-A1- 19 700 619
- US-A1- 2005 092 889
- US-B2- 7 971 319

## Beschreibung

Die Erfindung betrifft einen Plattenhalter für Tragkonstruktionen mit zwei Klemmbacken zur Eckverbindung von Füllungsplatten nach dem Anspruch 1. Gattungsgemäße Plattenhalter werden bereits in verschiedenen Ausführungsformen mit unterschiedlichen Konstruktionsprinzipien bezüglich der Führung und Funktion der Klemmbacken in der Praxis eingesetzt. Bekannt ist der Einsatz gattungsgemäßer Plattenhalter insbesondere, um die Befestigung oder schwenkbare Lagerung einer Abtrennung einer Dusche oder einer Badewanne mittels Füllungsplatten und/oder Türelementen zu ermöglichen. Vor diesem Hintergrund ist in der US 2005/0092889 A1 eine gattungsgemäße Vorrichtung zur Anbringung einer Glasplatte einer Duschkabine an einer feststehenden Wand offenbart. Zur Fixierung der Platte umfasst die Vorrichtung zwei Montageanordnungen, wobei eine erste Montageanordnung an der feststehenden Wand angebracht ist und die zweite Montageanordnung die Glasplatte klemmend aufnimmt. Die beiden Montageanordnungen sind über einen Tragarm, welcher je nach Ausführung winkelverstellbar ausgebildet sein kann, verbunden, wodurch die Vorrichtung die Anbringung einer Glasplatte mittels eines abgewinkelten Tragarms an einer Wand oder an einem Mauerwerk ermöglicht. Ein Gelenkband für Türen oder Fenster, das einen Einstellmechanismus für Vorzugspositionen aufweist, der sich insbesondere für kleine Gelenkbänder eignen soll, ist aus der US 7,971,319 B2 bekannt.

Um mehrere Türelemente oder Füllungsplatten miteinander zu verbinden, sind gattungsgemäße Plattenhalter als Gelenkbänder ausgebildet, welche eine Gelenkachse außerhalb der Glasflucht aufweisen können, wodurch ein komplettes Falten der Türelemente zur platzsparenden Anbringung an einer Seitenwand einer Dusch- oder Badewanne ermöglicht wird.

Des Weiteren sind gattungsgemäße Plattenhalter bekannt, die der Winkelverbindung im Eckbereich von Duschkabinen und/oder Tragkonstruktionen, wie beispielsweise Außengeländern, dienen. Allerdings sind diese gattungsgemäß mit zwei Klemmbacken ausgestatteten Plattenhalter nur mit einer vorgegebenen starren Winkeleinstellung bekannt. Diese gattungsgemäßen Plattenhalter weisen in der Regel eine starre Winkeleinstellung von 45°, 90° oder 180° auf. Insbesondere im Außenbereich kommt es aber häufig vor, dass Füllungsplatten mit einem von 45°, 90° oder 180° abweichenden Winkel miteinander verbunden werden müssen. Der Nachteil der starren Winkeleinstellung bestehender Plattenhalter führt in der Praxis oftmals entweder zu einem ästhetischen Mangel der Verbindung, einer Einschränkung der Funktionssicherheit oder einer aufwendigen Sonderanfertigung.

Ausgehend von diesem Stand der Technik ist es deshalb Aufgabe der vorliegenden Erfindung, einen Plattenhalter für Tragkonstruktionen mit zwei Klemmbacken zur Eckverbindung von Füllungsplatten vorzuschlagen, wobei die Klemmbacken des Plattenhalters winkelverstellbar miteinander verbunden sind, wodurch die Füllungsplatten in einer beliebig vorgebbaren Winkelstellung zueinander montiert werden können.

Diese Aufgabe wird durch einen Plattenhalter für Tragkonstruktionen mit zwei Klemmbacken zur Eckverbindung von Füllungsplatten nach der Lehre des Anspruchs 1 gelöst.

Vorteilhafte Ausführungsformen der Erfindung sind Gegenstand der Unteransprüche.

Die Erfindung beruht auf dem Grundgedanken, dass ein Plattenhalter für Tragkonstruktionen mit zwei Klemmbacken zur Eckverbindung von Füllungsplatten vorgesehen ist, wobei eine Klemmbacke zumindest einen Basiskörper und zumindest eine Klemmplatte umfasst. Die Füllungsplatte wird zwischen den Klemmflächen der Klemmplatte und des Basiskörpers fixiert und die Klemmkraft durch zumindest eine Klemmschraube aufgebracht, welche die Klemmplatte durchgreift. Um die Füllungsplatten in einer beliebig vorgebbaren Winkelstellung zueinander montieren zu können, sind die Basiskörper des Plattenhalters winkelverstellbar um eine Gelenkachse miteinander verbunden und mit zumindest einem Arretiermittel arretierbar. Dadurch können die Füllungsplatten, angepasst an die räumlichen Gegebenheiten, so zueinander angeordnet werden, dass die Tragkonstruktion sowohl den ästhetischen, den funktionalen als auch den sicherheitsrelevanten Vorgaben entspricht. Somit kann beispielsweise bei der Sanierung eines Altbaus ein Balkon mit einem an die Gegebenheiten angepassten Geländer versehen werden, auch wenn die Eckverbindungen der Füllungsplatten eine von 45°, 90° oder 180° abweichende Winkelstellung erfordern.

Es ist als erfindungswesentlich erkannt worden, dass die Basiskörper eine Arretierbohrung durch die Gelenksachse zur Aufnahme des Arretiermittels aufweisen. Zudem sind die Arretierbohrungen der Basiskörper eines Plattenhalters in einer Flucht angeordnet, wodurch sich die Montage des Plattenhalters besonders einfach und kostengünstig realisieren lässt.

Weiterhin weist die Arretierbohrung zumindest bereichsweise ein Innengewinde auf, so dass das Arretiermittel im arretierten Zustand mit einem Außengewinde in das Innengewinde der Arretierbohrung eingreift. Dadurch ist die Winkelstellung des Plattenhalters im arretierten Zustand fixierbar, wobei aufgrund der lösbaren Verbindung der Verschraubung eine nachträgliche Korrektur der Winkelstellung der Füllungsplatten möglich ist.

Grundsätzlich ist es beliebig, in welcher Form das Arretiermittel ausgebildet ist. Als besonders vorteilhaft hat sich die Ausbildung des Arretiermittels als Senkkopfschraube erwiesen. Die Verwendung einer Senkkopfschraube als Arretiermittel ermöglicht einen ästhetischen Gesamteindruck der Tragkonstruktion und bietet die Vorteile einer ebenen Oberfläche des Plattenhalters sowie einer lösbaren Verbindung zur nachträglichen Korrektur der Winkelstellung der Füllungsplatten zueinander.

Weiterhin ist es besonders vorteilhaft, dass der Basiskörper zumindest eine senkrecht zur Gelenkachse ausgebildete Rippe aufweist. Zur Verbindung der Basiskörper ist die Einbringung der das Arretiermittel aufnehmenden Arretierbohrung in die Rippe entlang der Gelenkachse vorgesehen.

Um die Montage bzw. die Arretierung des Plattenhalters zu vereinfachen, werden die Klemmbacken des Plattenhalters vorteilhafterweise so angeordnet, dass die Rippen der Basiskörper parallel zueinander und/oder ineinandergreifend angeordnet sind. Durch diese vorteilhafte Form der Anordnung liegen die Arretierbohrungen der Rippen in einer Flucht und können auf einfache Weise mittels des Arretiermittels verbunden und arretiert werden.

Um eine einfache und kostengünstige Fertigung sowie Montage des Plattenhalters zu ermöglichen, hat es sich als vorteilhaft erwiesen, wenn die die Basiskörper und/oder die Klemmbacken des Plattenhalters baugleich sind. Durch die gleiche Bauart kann die Anzahl der zu fertigenden Einzelteile deutlich verringert werden, so dass lediglich zwei baugleiche Basiskörper und/oder zwei baugleiche Klemmplatten anstatt eines linken und eines rechten Basiskörpers und/oder einer linken und einer rechten Klemmplatte zur Bildung eines Plattenhalters vorgesehen werden müssen. Dies führt insbesondere in der Fertigung zu Einsparungen aufgrund der Verringerung der Variantenanzahl, der Senkung von Werkzeugkosten sowie Lagerhaltungskosten. Zudem wird durch standardisierte Einzelteile die Verfügbarkeit erhöht und durch den universellen Einsatz der Montageablauf vereinfacht.

Weiterhin ist es besonders vorteilhaft, dass, wenn in eine Rippe eines ersten Basiskörpers und in die Rippe eines zweiten Basiskörpers entlang der Gelenkachse eine Arretierbohrung eingebracht ist, das Arretiermittel die Arretierbohrung in der Rippe des ersten Basiskörpers durchgreift und mit einem Außengewinde in das Innengewinde der Arretierbohrung in der Rippe des zweiten Basiskörpers eingreift. Somit kann auf einfache Art und Weise die Verbindung zweier Basiskörper, insbesondere baugleicher Basiskörper, erfolgen.

Grundsätzlich ist es beliebig, wie die erforderliche Arretierkraft aufgebracht wird, solange die Basiskörper und somit die Füllungsplatten in einer beliebigen Winkelstellung zueinander arretiert werden können. Als besonders vorteilhaft hat es sich jedoch erwiesen, die Arretierkraft durch zwei Arretiermittel aufzubringen, welche in entgegengesetzter Richtung in die Arretierbohrung eingeführt werden. Hierzu wird das erste Arretiermittel von einer ersten Außenseite des Plattenhalters, beispielsweise von oben nach unten, entlang der Gelenkachse in die Arretierbohrng eingeführt und das zweite Arretiermittel in entgegengesetzter Richtung von einer zweiten Außenseite des Plattenhalters, beispielsweise von unten nach oben, entlang der Gelenkachse in die Arretierbohrung eingeführt. Besonders vorteilhaft ist die Verwendung zweier baugleicher Arretiermittel, so dass einerseits die Anzahl der vorzuhaltenden Einzelteile verringert wird und andererseits ein universell und flexibel einsetzbarer Plattenhalter zur stabilen Arretierung einer Winkelstellung von Füllungsplatten in Tragkonstruktionen bereitgestellt werden kann Grundsätzlich ist die Ausgestaltung der Basiskörper des Plattenhalters beliebig, solange die Basiskörper winkelverstellbar um eine Gelenkachse miteinander verbunden werden können. Um die an der Tragkonstruktion wirkenden Innenkräfte aufzunehmen und den Belastungen dauerhaft standzuhalten, ist es besonders vorteilhaft, wenn ein erster Basiskörper des Plattenhalters drei Rippen aufweist und ein zweiter Basiskörper zwei Rippen aufweist. Die Basiskörper werden zur Verbindung von Füllungsplatten so angeordnet, dass die Rippen der Basiskörper ineinandergreifen und die Basiskörper über das Arretiermittel verbindbar sind.

In einer alternativen vorteilhaften Ausführungsform umfasst das Arretiermittel zumindest zwei Zahnscheiben, die in einer Arretierposition miteinander in Eingriff stehen. Dabei verläuft die Gelenkachse des Plattenhalters durch den Mittelpunkt der Zahnscheiben, um die Basiskörper und somit auch die Füllungsplatten in einer beliebig vorgebbaren Winkelstellung zueinander anordnen zu können.

Besonders einfach und effektiv kann die Montage und Einstellung des Plattenhalters erfolgen, wenn zwei Basiskörper des Plattenhalters je eine Rippe aufweisen, in die jeweils eine Zahnscheibe eingebracht ist. Zur Arretierung des Plattenhalters in der gewünschten Winkelstellung werden die Zahnscheiben miteinander in Eingriff gebracht.

Um die Füllungsplatten sicher im Plattenhalter zu befestigen, ist es vorteilhaft, die Klemmplatte und den Basiskörper der Klemmbacke an der zur Füllungsplatte weisenden Klemmfläche mit elastischen Dämpfungskörpern zu versehen. Die elastischen Dämpfungskörper dienen neben dem Schutz der Füllungsplatten, insbesondere wenn diese aus Glas sind, auch dem Ausgleich von Fertigungsungenauigkeiten der Füllungsplatten an den von der Klemmbacke beanspruchten Oberflächen.

Grundsätzlich ist es beliebig, aus welchem Material der elastische Dämpfungskörper hergestellt ist, solange er die notwendige Dämpfungseigenschaft aufbringt. Besonders vorteilhaft ist es, wenn der elastische Dämpfungskörper aus elastischem Kunststoff und/oder Gummi hergestellt ist.

Zur Realisierung einer möglichst kompakten Bauweise des Plattenhalters und aufwandsarmen Klemmung der Füllungsplatten ist es vorteilhaft, die Klemmschrauben als Senkkopfschrauben auszubilden und beabstandet zur Füllungsplatte außerhalb der Klemmfläche anzuordnen. Somit werden vorteilhafterweise nur der Basiskörper und die Klemmplatte von der Klemmschraube durchgriffen, nicht jedoch die Füllungsplatte, wodurch diese unbearbeitet in einer Tragkonstruktion verbaut werden kann. Unbearbeitet bedeutet in diesem Zusammenhang, dass keine Nachbearbeitung der meist rechteckig ausgebildeten Füllungsplatten, insbesondere das Einbringen von Bohrungen oder Ausschnitten, nötig ist. Dadurch können neben dem zusätzlichen Kosten- und Zeitaufwand zur Nachbearbeitung zudem sicherheitsrelevante Schwachstellen in den Füllungsplatten vermieden werden. Aufgrund der Möglichkeiten zur Anbringung der Tragkonstruktion sowohl im Innen- als auch im Außenbereich hat es sich als besonders vorteilhaft erwiesen, wenn die Füllungsplatten aus Glas, Holz und/oder Blech hergestellt sind. Um eine anforderungsgerechte Witterungsbeständigkeit und die Aufnahme hoher Lasten gewährleisten zu können, ist es besonders vorteilhaft, wenn der Plattenhalter aus Metall hergestellt ist. Dadurch kann der beanspruchte Plattenhalter an Tragkonstruktionen umfassend Geländer für Balkone, Treppen und/oder Terrassen im Innenbereich und/oder im Außenbereich eingesetzt werden.

Beispielhafte Ausführungsformen der Erfindung sind in den Zeichnungen dargestellt und werden nachfolgend erläutert.

Es zeigen:
**Fig. 1** eine Explosionszeichnung ersten Ausführungsform eines Plattenhalters in perspektivischer Ansicht;
**Fig. 2**einen Plattenhalter für Tragkonstruktionen mit zwei Klemmbacken in perspektivischer Ansicht;
**Fig. 3**einen Plattenhalter für Tragkonstruktionen im Einbauzustand in perspektivischer Ansicht;
**Fig. 4**eine Explosionszeichnung einer zweiten Ausführungsform eines Plattenhalters in perspektivischer Ansicht.

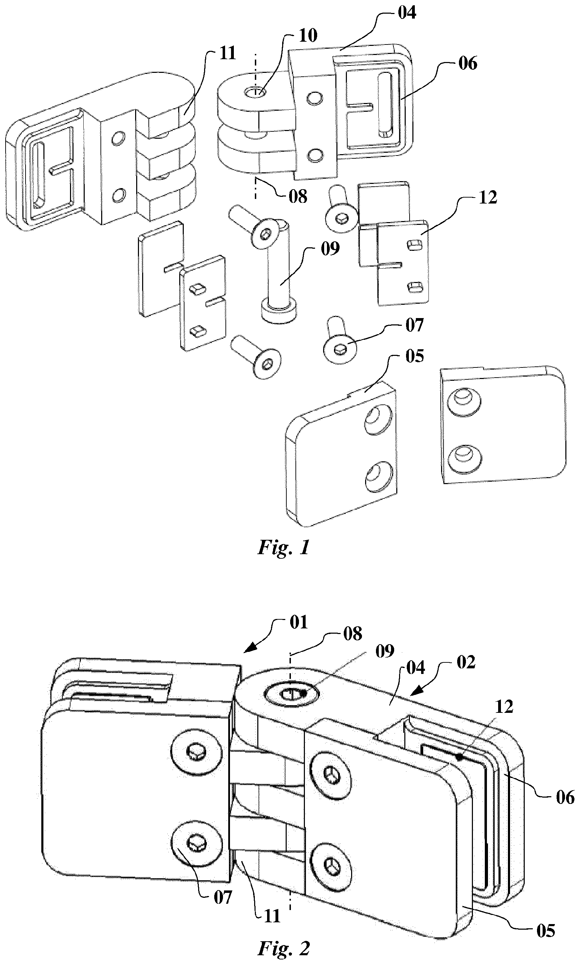

Die **Fig. 1** zeigt eine perspektivische Darstellung einer Explosionszeichnung eines Plattenhalters 01 für Tragkonstruktionen, in der die Einzelteile einer vorteilhaften Ausführungsform des Plattenhalters 01 dargestellt sind. Es ist zu erkennen, dass der Plattenhalter 01 zwei Klemmbacken 02 umfasst, wobei jede der Klemmbacken 02 je einen Basiskörper 04 und eine Klemmplatte 05 umfasst. Zudem weist der Plattenhalter 01 in der dargestellten vorteilhaften Ausführungsform elastische Dämpfungskörper 12 auf, welche so auf der zur Füllungsplatte 03 weisenden Klemmfläche 06 des Basiskörpers 04 sowie der Klemmplatte 05 angeordnet werden, dass durch die Dämpfungseigenschaften des Dämpfungskörpers 12 trotz Aufbringung einer entsprechenden Klemmkraft die Füllungsplatte 03 vor Materialbruch bzw. Materialermüdung ausreichend geschützt wird. Die zur sicheren Montage der Tragkonstruktion erforderliche Klemmkraft wird mittels der Klemmschrauben 07 zwischen den Klemmflächen 06 des Basiskörpers 04 und der Klemmplatte 05 aufgebracht. Weiterhin zu erkennen sind die Rippen 11 der Basiskörper 04, welche im montierten Zustand ineinandergreifen. In der dargestellten vorteilhaften Ausführungsform weist der erste Basiskörper 04 drei Rippen 11 und der zweite Basiskörper 04 zwei Rippen 11 auf. Um den Plattenhalter 01 in einer vorgegebenen Winkelstellung zu arretieren, wird das Arretiermittel 09 in die Arretierbohrung 10 eingebracht. In der dargestellten vorteilhaften Ausführungsform ist das Arretiermittel 09 eine Schraube, die in ein Innengewinde der Arretierbohrungen 10 im arretierten Zustand eingreift. Die Arretierbohrungen 10 verlaufen durch die Gelenkachse 08, so dass die Basiskörper 04 des Plattenhalters 01 winkelverstellbar um diese Gelenkachse 08 miteinander verbindbar sind.

Eine perspektivische Ansicht des Plattenhalters 01 zeigt Fig. 2. Vorliegend befindet sich die durch die Arretierbohrung 10 definierte Gelenkachse 08 an der Verbindungsstelle der zwei Basiskörper 04. Gemäß der dargestellten vorteilhaften Ausführungsform weist der erste Basiskörper 04 zwei Rippen 11 auf, die in die drei Rippen 11 des zweiten Basiskörpers 04 eingreifen. Die Arretierung der Klemmbacken 02 des Plattenhalters 01 in einer vorgegebenen Winkelstellung zueinander erfolgt durch das Arretiermittel 09, welches in die Arretierbohrungen 10 der Rippen 11 eingebracht wird. Die erforderliche Klemmkraft zwischen Basiskörper 04 und Klemmplatte 05 wird in der dargestellten Ausführungsform durch insgesamt vier Klemmschrauben 07 aufgebracht, wobei die Klemmschrauben 07 als Senkkopfschrauben ausgebildet sind. Die in Fig. 2 nicht dargestellten Füllungsplatten 03 werden zur Montage der Tragkonstruktion zwischen Basiskörper 04 und Klemmplatte 05 geklemmt. Zum Schutz des Materials der Füllungsplatte 03 können, wie vorliegend dargestellt, Dämpfungskörper 12 auf die Klemmflächen 06 des Basiskörpers 04 und/oder der Klemmplatte 05 aufgebracht werden.

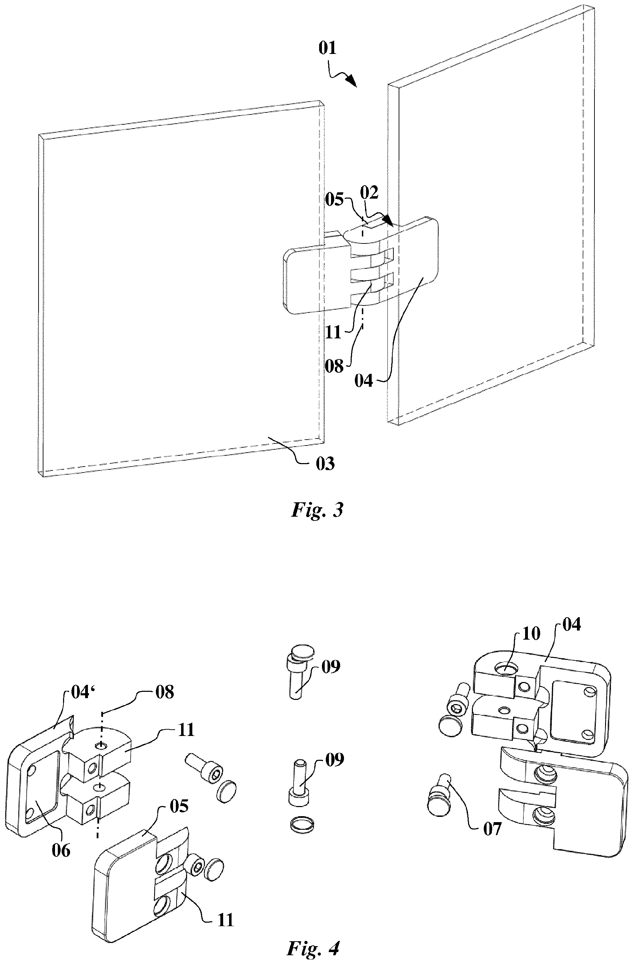

**Fig. 3** zeigt den Plattenhalter 01 im Einbauzustand in perspektivischer Ansicht. Es ist zu erkennen, dass die Füllungsplatten 03 in die beiden Klemmbacken 02 des Plattenhalters 01 geklemmt sind. In der vorliegenden vorteilhaften Ausführungsform weist der erste Basiskörper 04 drei Rippen 11 und der zweite Basiskörper 04 zwei Rippen 11 auf, wobei die Rippen ineinandergreifen. Die in die Rippen 11 eingebrachten Arretierbohrungen 10 sind in einer Flucht angeordnet und verlaufen durch die Gelenkachse 08. Auf diese Weise sind die Basiskörper 04 des Plattenhalters 01 winkelverstellbar zueinander um die Gelenkachse 08 miteinander verbunden, und der zur Anbringung der Tragkonstruktion notwendige Winkel zwischen den Basiskörpern 04 kann eingestellt werden. Im Anschluss an die Justierung der Tragkonstruktion wird die Winkelstellung mit dem Arretiermittel 09 fixiert, so dass sowohl die Sicherheitsanforderungen aus dem privaten als auch aus dem öffentlichen Bereich erfüllt werden können. Um die in der dargestellten vorteilhaften Ausführungsform aus Glas hergestellten Füllungsplatten 03 zu schützen und einen direkten Kontakt von Basiskörper 04 und/oder Klemmplatte 05 mit der Füllungsplatte 03 zu verhindern, können auf die Klemmflächen 06 elastische Dämpfungskörper 12 aufgebracht werden.

Die **Fig. 4** zeigt eine perspektivische Darstellung einer Explosionszeichnung einer zweiten Ausführungsform eines Plattenhalters 01 für Tragkonstruktionen. Es ist zu erkennen, dass der Plattenhalter 01 zwei baugleiche Basiskörper 04, 04' und zwei baugleiche Klemmplatten 05 umfasst, wobei je eine der Klemmplatten 05 an einem Basiskörper 04, 04' zur Ausbildung einer Klemmbacke 02 angeordnet werden kann. Die Klemmschrauben 07 durchgreifen im montierten Zustand die Klemmplatte 05 und fixieren die Klemmplatte 05 auf dem Basiskörper 04, 04', ohne die Füllungsplatte 03 zu durchgreifen, so dass die Füllungsplatte 03 unter Ausnutzung der Klemmflächen 06 des Basiskörpers 04, 04' und der Klemmplatte 05 geklemmt wird. Zur Anordnung der Füllungsplatte 03 zwischen den Klemmflächen 06 und zur Aufbringung einer entsprechenden Klemmkraft müssen somit keine Bohrungen in die Füllungsplatte 03 eingebracht werden, so dass die Füllungsplatte 03 vor Materialbruch bzw. Materialermüdung ausreichend geschützt wird. Weiterhin zu erkennen sind die Rippen 11 der Basiskörper 04, 04', welche im montierten Zustand ineinandergreifen. Es ist zu erkennen, dass die beiden baugleichen Basiskörper 04, 04' je zwei Rippen 11 aufweisen. Um den Plattenhalter 01 in einer vorgegebenen Winkelstellung zu arretieren, werden die Arretiermittel 09 in die Arretierbohrung 10 eingebracht. In der dargestellten vorteilhaften Ausführungsform sind zwei Schrauben als Arretiermittel 09 in den Arretierbohrungen 10 der baugleichen Basiskörper 04, 04' vorgesehen. Hierzu wird eine Schraube gemäß der vorliegenden Darstellung von der unteren Außenseite des Plattenhalters 01 entlang der Gelenkachse 08 von unten nach oben und eine weitere Schraube in entgegengesetzter Richtung von der oberen Außenseite des Plattenhalters 01 von oben nach unten in die Arretierbohrung 10 eingeführt. Zur Verbindung der Basiskörper 04 und zur Aufbringung der Arretierkraft greift das Arretiermittel 09, vorliegend zwei Schrauben, mit einem Außengewinde in ein Innengewinde der Arretierbohrungen 10 im arretierten Zustand ein. Da der in Fig. 4 dargestellte Plattenhalter 01 insgesamt vier Rippen 11 aufweist, durchgreift die von oben nach unten eingeführte Schraube die obere Rippe 11 des ersten Basiskörpers 04, und das Außengewinde der Schraube greift in das Innengewinde der in die obere Rippe 11 des zweiten Basiskörpers 04' eingebrachten Arretierbohrung 10 ein. Die in entgegengesetzter Richtung von unten nach oben eingebrachte Schraube durchgreift die untere Rippe 11 des zweiten Basiskörpers 04' und greift mit ihrem Außengewinde in das Innengewinde der in die untere Rippe 11 des ersten Basiskörpers 04 eingebrachten Arretierbohrung 10 ein. Die Arretierbohrungen 10 verlaufen durch die Gelenkachse 08, so dass die Basiskörper 04, 04' des Plattenhalters 01 winkelverstellbar um diese Gelenkachse 08 miteinander verbindbar sind. Zudem werden die Arretiermittel 09 und Klemmschrauben 07 in der dargestellten Ausführungsform durch Schutzkappen zur Schaffung eines ansprechenden Erscheinungsbildes und zum Schutz vor äußeren Einflüssen abgedeckt.

## Patentansprüche

1. Plattenhalter (01) für Tragkonstruktionen geeignet zur Eckverbindung von Füllungsplatten (03) umfassend zwei Klemmbacken (02), wobei eine Klemmbacke (02) zumindest einen Basiskörper (04) und zumindest eine Klemmplatte (05) umfasst, und wobei zumindest eine Füllungsplatte (03) zwischen einer Klemmfläche (06) der Klemmplatte (05) und einer Klemmfläche (06) des Basiskörpers (04) fixiert ist, und wobei die Klemmkraft durch zumindest eine die Klemmplatte (05) durchgreifende Klemmschraube (07) aufgebracht wird,
wobei
die Basiskörper (04) des Plattenhalters (01) winkelverstellbar um eine Gelenkachse (08) miteinander verbunden sind, wobei die Basiskörper (04) in einer beliebig vorgebbaren Winkelstellung zueinander anordenbar und mit zumindest einem Arretiermittel (09) arretierbar sind, und wobei die Basiskörper (04) eine Arretierbohrung (10) durch die Gelenkachse (08) zur Aufnahme des Arretiermittels (09) aufweisen, und wobei die Arretierbohrungen (10) der Basiskörper (04) eines Plattenhalters (01) in einer Flucht angeordnet sind, und wobei die Arretierbohrung (10) zumindest bereichsweise ein Innengewinde aufweist, und wobei das Arretiermittel (09) im arretierten Zustand mit einem Außengewinde in das Innengewinde eingreift.

2. Plattenhalter nach Anspruch 1,
**dadurch gekennzeichnet,**
**dass** das Arretiermittel (09) als Senkkopfschraube ausgebildet ist.

3. Plattenhalter nach Anspruch 1 oder 2,
**dadurch gekennzeichnet,**
**dass** der Basiskörper (04) zumindest eine senkrecht zur Gelenkachse (08) ausgebildete Rippe (11) aufweist, wobei die durch die Gelenkachse (08) verlaufende Arretierbohrung (10) in die Rippe (11) eingebracht ist.

4. Plattenhalter nach Anspruch 3,
**dadurch gekennzeichnet,**
**dass** die Klemmbacken (02) des Plattenhalters (01) so angeordnet sind, dass die Rippen (11) der Basiskörper (04) parallel zueinander und/oder ineinandergreifend angeordnet sind, wobei die Arretierbohrungen (10) der Rippen (11) in einer Flucht angeordnet sind.

5. Plattenhalter nach einem der Ansprüche 1 bis 4,
**dadurch gekennzeichnet,**
**dass** die Basiskörper (04) und/oder die Klemmplatten (05) des Plattenhalters (01) baugleich sind.

6. Plattenhalter nach einem der Ansprüche 1 bis 5,
**dadurch gekennzeichnet,**
**dass** das Arretiermittel (09) die in eine Rippe (11) eines ersten Basiskörpers (04) durch die Gelenkachse (08) eingebrachte Arretierbohrung (10) durchgreift, wobei das Arretiermittel (09) mit einem Außengewinde in das Innengewinde der in eine Rippe (11) eines zweiten Basiskörpers (04) entlang der Gelenkachse (08) eingebrachten Arretierbohrung (10) eingreift.

7. Plattenhalter nach einem der Ansprüche 1 bis 6,
**dadurch gekennzeichnet,**
**dass** die Arretierkraft durch zwei Arretiermittel (09) aufgebracht wird, wobei das erste Arretiermittel (09) von einer ersten Außenseite des Plattenhalters (01) entlang der Gelenkachse (08) und das zweite Arretiermittel (09) in entgegengesetzter Richtung von einer zweiten Außenseite des Plattenhalters (01) entlang der Gelenkachse (08) in die Arretierbohrung (10) eingeführt wird.

8. Plattenhalter nach einem der Ansprüche 1 bis 7,
**dadurch gekennzeichnet,**
**dass** ein erster Basiskörper (04) des Plattenhalters (01) drei Rippen (11) aufweist und ein zweiter mit dem ersten Basiskörper (04) über das Arretiermittel (09) verbindbarer Basiskörper (04) zwei Rippen (11) aufweist.

9. Plattenhalter nach einem der Ansprüche 1 bis 8,
**dadurch gekennzeichnet,**
**dass** das Arretiermittel (09) zumindest zwei Zahnscheiben umfasst, wobei die Zahnscheiben in einer Arretierposition in Eingriff stehen, und wobei die Gelenkachse (08) des Plattenhalters (01) durch den Mittelpunkt der Zahnscheiben verläuft.

10. Plattenhalter nach einem der vorhergehenden Ansprüche 1 bis 6 oder 9,
**dadurch gekennzeichnet,**
**dass** zwei Basiskörper (04) des Plattenhalters (01) je eine Rippe (11) aufweisen, wobei in jede der Rippen (11) eine Zahnscheibe eingebracht ist.

11. Plattenhalter nach einem der Ansprüche 1 bis 10,
**dadurch gekennzeichnet,**
**dass** die Klemmplatte (05) und der Basiskörper (04) der Klemmbacke (02) an der zur Füllungsplatte (03) weisenden Klemmfläche (06) elastische Dämpfungskörper (12) aufweisen.

12. Plattenhalter nach Anspruch 11,
**dadurch gekennzeichnet,**
**dass** der elastische Dämpfungskörper (12) aus elastischem Kunststoff und/oder Gummi hergestellt ist.

13. Plattenhalter nach einem der Ansprüche 1 bis 12,
**dadurch gekennzeichnet,**
**dass** die Klemmschraube (07) beabstandet zur Füllungsplatte (03) außerhalb der Klemmfläche (06) angeordnet und als Senkkopfschraube ausgebildet ist.

## Claims

1. A panel holder (01) for support structures, said panel holder (01) being suitable for a corner joint of filling panels (03) and comprising two clamping jaws (02), wherein a clamping jaw (02) comprises at least one base body (04) and at least one clamping plate (05), wherein at least one filling plate (03) is fixed between a clamping surface (06) of the clamping plate (05) and a clamping surface (06) of the base body (04), wherein the clamping force is applied by at least one clamping screw (07) passing through the clamping plate (05), wherein the base bodies (04) of the panel holder (01) are joined to each other in such a manner that they are angularly adjustable about a hinge axis (08), wherein the base bodies (04) are arrangeable relative to each other in an angular position which is predeterminable at will and are lockable with at least one locking element (09), wherein the base bodies (04) have a locking bore (10) through the hinge axis (08) to receive the locking element (09), wherein the locking bores (10) of the base bodies (04) of a panel holder (01) are arranged in alignment, wherein the locking bore (10), at least partially, has an internal thread, and wherein, in the locked state, the locking element (09) engages with an external thread into the internal thread.

2. The panel holder according to claim 1,
**characterised in that**
the locking element (09) is realised as a countersunk head screw.

3. The panel holder according to claim 1 or 2,
**characterised in that**
the base body (04) has at least one rib (11) which is realised perpendicularly to the hinge axis (08), wherein the locking bore (10) extending through the hinge axis (08) is formed into the rib (11).

4. The panel holder according to claim 3,
**characterised in that**
the clamping jaws (02) of the panel holder (01) are arranged in such a manner that the ribs (11) of the base bodies (04) are arranged parallel to each other and/or in an interlocking manner, wherein the locking bores (10) of the ribs (11) are arranged in alignment.

5. The panel holder according to any one of claims 1 to 4,
**characterised in that**
the base bodies (04) and/or the clamping plates (05) of the panel holder (01) are structurally identical.

6. The panel holder according to any one of claims 1 to 5,
**characterised in that**
the locking element (09) passes through the locking bore (10) formed into a rib (11) of a first base body (04) through the hinge axis (08), wherein the locking element (09) engages with an external thread into the internal thread of the locking bore (10) formed into a rib (11) of a second base body (04) along the hinge axis (08).

7. The panel holder according to any one of claims 1 to 6,
**characterised in that**
the locking force is applied by two locking elements (09), wherein the first locking element (09) is introduced into the locking bore (10) from a first outer side of the panel holder (01) along the hinge axis (08) and the second locking element (09) is introduced into the locking bore (10) in an opposite direction from a second outer side of the panel holder (01) along the hinge axis (08).

8. The panel holder according to any one of claims 1 to 7,
**characterised in that**
a first base body (04) of the panel holder (01) has three ribs (11) and a second base body (04) which is joinable to the first base body (04) by means of the locking element (09) has two ribs (11).

9. The panel holder according to any one of claims 1 to 8,
**characterised in that**
the locking element (09) comprises at least two tooth lock washers, wherein the tooth lock washers are in engagement in a locking position, and wherein the hinge axis (08) of the panel holder (01) runs through the centre of the tooth lock washers.

10. The panel holder according to any one of preceding claims 1 to 6 or 9,
**characterised in that**
each one of two base bodies (04) of the panel holder (01) has a rib (11), wherein a tooth lock washer is inserted into each of the ribs (11).

11. The panel holder according to any one of claims 1 to 10,
**characterised in that**
the clamping plate (05) and the base body (04) of the clamping jaw (02) have elastic damping bodies (12) on the clamping surface (06) oriented towards the filling panel (03).

12. The panel holder according to claim 11,
**characterised in that**
the elastic damping body (12) is made of elastic plastic and/or rubber.

13. The panel holder according to any one of claims 1 to 12,
**characterised in that**
the clamping screw (07) is arranged at a distance from the filling panel (03) outside the clamping surface (06) and is realised as a countersunk head screw.

## Revendications

1. Support de panneaux (01) pour des structures porteuses, ledit support de panneaux (01) étant convenable pour un assemblage d'angle de panneaux de remplissage (03) et comprenant deux mâchoires de serrage (02), dans lequel une mâchoire de serrage (02) comprend au moins un corps de base (04) et au moins une plaque de serrage (05), dans lequel au moins un panneau de remplissage (03) est fixé entre une surface de serrage (06) de la plaque de serrage (05) et une surface de serrage (06) du corps de base (04), dans lequel la force de serrage est appliquée par au moins une vis de serrage (07) qui passe à travers la plaque de serrage (05), dans lequel les corps de base (04) du support de panneaux (01) sont reliés l'un à l'autre de telle manière qu'ils sont réglables angulairement autour d'un axe d'articulation (08), dans lequel les corps de base (04) sont capables d'être disposés l'un par rapport à l'autre dans une position angulaire qui est capable d'être prédéterminée à volonté et sont arrêtables avec au moins un moyen d'arrêt (09), dans lequel les corps de base (04) ont un alésage d'arrêt (10) à travers l'axe d'articulation (08) pour recevoir le moyen d'arrêt (09), dans lequel les alésages d'arrêt (10) des corps de base (04) d'un support de panneaux (01) sont disposés en alignement, dans lequel l'alésage d'arrêt (10), au moins partiellement, a un filetage femelle, et dans lequel, dans l'état arrêté, le moyen d'arrêt (09) vient en prise dans le filetage femelle avec un filetage mâle.

2. Support de panneaux selon la revendication 1,
**caractérisé en ce que**
le moyen d'arrêt (09) est réalisé comme vis à tête fraisée.

3. Support de panneaux selon la revendication 1 ou 2,
**caractérisé en ce que**
le corps de base (04) a au moins une nervure (11) qui est réalisée perpendiculairement par rapport à l'axe d'articulation (08), dans lequel l'alésage d'arrêt (10) qui s'étend à travers l'axe d'articulation (08) est formé dans la nervure (11).

4. Support de panneaux selon la revendication 3,
**caractérisé en ce que**
les mâchoires de serrage (02) du support de panneaux (01) sont disposées de telle manière que les nervures (11) des corps de base (04) sont disposées parallèlement l'une par rapport à l'autre et/ou de manière imbriquée, dans lequel les alésages d'arrêt (10) des nervures (11) sont disposés en alignement.

5. Support de panneaux selon l'une quelconque des revendications 1 à 4,
**caractérisé en ce que**
les corps de base (04) et/ou les plaques de serrage (05) du support de panneaux (01) sont de conception identique.

6. Support de panneaux selon l'une quelconque des revendications 1 à 5,
**caractérisé en ce que**
le moyen d'arrêt (09) passe à travers l'alésage d'arrêt (10) formé dans une nervure (11) d'un premier corps de base (04) à travers l'axe d'articulation (08), dans lequel un filetage mâle du moyen d'arrêt (09) vient en prise dans le filetage femelle de l'alésage d'arrêt (10) formé dans une nervure (11) d'un deuxième corps de base (04) le long de l'axe d'articulation (08).

7. Support de panneaux selon l'une quelconque des revendications 1 à 6,
**caractérisé en ce que**
la force d'arrêt est appliquée par deux moyens d'arrêt (09), dans lequel le premier moyen d'arrêt (09) est introduit dans l'alésage d'arrêt (10) à partir d'un premier côté extérieur du support de panneaux (01) le long de l'axe d'articulation (08) et le deuxième moyen d'arrêt (09) est introduit dans l'alésage d'arrêt (10) dans la direction opposée à partir d'un deuxième côté extérieur du support de panneaux (01) le long de l'axe d'articulation (08).

8. Support de panneaux selon l'une quelconque des revendications 1 à 7,
**caractérisé en ce**
**qu'**un premier corps de base (04) du support de panneaux (01) a trois nervures (11) et un deuxième corps de base (04) qui est capable d'être relié au premier corps de base (04) à l'aide du moyen d'arrêt (09) a deux nervures (11).

9. Support de panneaux selon l'une quelconque des revendications 1 à 8,
**caractérisé en ce que**
le moyen d'arrêt (09) comprend au moins deux rondelles à dents, dans lequel les rondelles à dents sont en prise dans une position d'arrêt, et dans lequel l'axe d'articulation (08) du support de panneaux (01) s'étend à travers le centre des rondelles à dents.

10. Support de panneaux selon l'une quelconque des revendications précédentes 1 à 6 ou 9,
**caractérisé en ce que**
chacun de deux corps de base (04) du support de panneaux (01) a une nervure (11), dans lequel une rondelle à dents est insérée dans chacune des nervures (11).

11. Support de panneaux selon l'une quelconque des revendications 1 à 10,
**caractérisé en ce que**
la plaque de serrage (05) et le corps de base (04) de la mâchoire de serrage (02) ont des corps amortisseurs (12) élastiques sur la surface de serrage (06) orientée vers le panneau de remplissage (03).

12. Support de panneaux selon la revendication 11,
**caractérisé en ce que**
le corps amortisseur (12) élastique est en plastique élastique et/ou en caoutchouc.

13. Support de panneaux selon l'une quelconque des revendications 1 à 12,
**caractérisé en ce que**
la vis de serrage (07) est disposée à une distance du panneau de remplissage (03) à l'extérieur de la surface de serrage (06) et est réalisée comme vis à tête fraisée.
